# EUROPEAN PATENT APPLICATION

(11) **EP 3 890 215 A1**
(43) Date of publication of application: **06.10.2021**
(21) Application number: 19893236.0
(22) Date of filing: 18.10.2019
(51) Int. Cl.: H04B 15/02

(54) **ELECTROMAGNETIC INTERFERENCE CONTROL METHOD AND RELATED APPARATUS**

(30) Priority: 04.12.2018 CN 201811472836
(71) Applicant: GUANGDONG OPPO MOBILE TELECOMMUNICATIONS CORP., LTD., Dongguan, Guangdong 523860 (CN)
(72) Inventor: WANG, Xunfeng, Dongguan, Guangdong 523860 (CN); TANG, Kai, Dongguan, Guangdong 523860 (CN); TAN, Zhengpeng, Dongguan, Guangdong 523860 (CN)
(74) Representative: Taor, Simon Edward William
(86) International application number: PCT/CN2019/111970
(87) International publication number: WO 2020/114103

(57) **Abstract**

Disclosed in embodiments of the present application are an electromagnetic interference control method and a related apparatus. The method comprises: when detecting that the camera of an electronic device is in an on state, detecting whether electromagnetic interference occurs between the camera and a radio frequency system; if yes, detecting the screen state of the electronic device, and determining a dynamic switching strategy of four antennas according to the screen state; and detecting the communication quality of at least one antenna other than the currently enabled antenna according to the dynamic switching strategy, and performing an antenna switching operation when the communication quality satisfies a switching condition to avoid or reduce the electromagnetic interference. The embodiments of the present application facilitate reducing or avoiding electromagnetic interference.

## Description

### FIELD OF THE INVENTION

The present disclosure relates to an electronic device, and more particularly, to an electromagnetic interference control method and an electromagnetic interference control device.

### BACKGROUND

When a camera and a radio frequency (RF) system works at the same time, some working frequencies of the RF system may introduce electromagnetic interferences with the camera. Due to the interferences, the camera may have a lag or noises in a preview screen or when a picture is taken. Conventionally, a screening cover could be added on the transmission lines of the camera to reduce the electromagnetic interferences introduced by the RF system. However, this increases the cost and volume of the electronic device by adding more hardware and is not flexible and smart.

### SUMMARY

According to a first aspect of an embodiment of the present disclosure, an electromagnetic interference control method for an electronic device is disclosed. The electronic device comprises four antennas. The method comprises: detecting whether there is an electromagnetic interference between a radio frequency (RF) system and the camera in response to detecting that a camera of the electronic device is in a turned-on state; detecting a screen state of the electronic device in response to the detected electromagnetic interference, and determining a dynamic switching policy of the four antennas according to the screen state, wherein the screen state comprises a vertical screen state and a horizontal screen state, and the dynamic switching policy comprises a detection priority sequence of the four antennas and a switching condition of the four antennas; and detecting a communication quality of at least one antenna not currently-used according to the dynamic switching policy, and performing an antenna switching in response to the communication quality meeting the switching condition.

According to a second aspect of an embodiment of the present disclosure, an electronic device is disclosed. The electronic device includes a processor, a memory, a communication interface, and one or more procedures stored in the memory comprising instructions that are executable by the processor to perform operations comprising: detecting whether there is an electromagnetic interference between a radio frequency (RF) system and a camera in response to detecting that a camera of the electronic device is in a turned-on state; detecting a screen state of the electronic device in response to the detected electromagnetic interference, and determining a dynamic switching policy of the four antennas according to the screen state, wherein the screen state comprises a vertical screen state and a horizontal screen state, and the dynamic switching policy comprises a detection priority sequence of the four antennas and a switching condition of the four antennas; and detecting a communication quality of at least one antenna not currently-used according to the dynamic switching policy, and performing an antenna switching in response to the communication quality meeting the switching condition.

According to a third aspect of an embodiment of the present disclosure, a non-transitory computer-readable storage medium storing computer procedures for electronic data interchange is disclosed. The computer procedures are executable by a computer to perform operations comprising: detecting a screen state of the electronic device in response to the detected electromagnetic interference, and determining a dynamic switching policy of the four antennas according to the screen state, wherein the screen state comprises a vertical screen state and a horizontal screen state, and the dynamic switching policy comprises a detection priority sequence of the four antennas and a switching condition of the four antennas; and detecting a communication quality of at least one antenna not currently-used according to the dynamic switching policy, and performing an antenna switching in response to the communication quality meeting the switching condition.

According to a fourth aspect of an embodiment of the present disclosure, a computer procedure product comprises a non-transitory computer-readable storage medium storing computer procedures. The computer procedures are executable by a computer to perform steps of any of the above embodiments. The computer procedure product may be a software installation package.

### BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may still derive other drawings from these accompanying drawings without creative efforts.
Fig. 1 is a diagram of an electronic device according to an embodiment of the present disclosure.
Fig. 2 is a flow chart of an electromagnetic interference control method according to an embodiment of the present disclosure.
Fig. 3 is a flow chart of an electromagnetic interference control method according to another embodiment of the present disclosure.
Fig. 4 is a flow chart of an electromagnetic interference control method according to another embodiment of the present disclosure.
Fig. 5 is a diagram of an electronic device according to another embodiment of the present disclosure.
Fig. 6 is a functional block diagram of an electromagnetic interference control device according to another embodiment of the present disclosure.

### DETAILED DESCRIPTION OF PREFERRED EMBODIMENTS

To help a person skilled in the art better understand the solutions of the present disclosure, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present disclosure.

Specifically, the terminologies in the embodiments of the present disclosure are merely for describing the purpose of the certain embodiment, but not to limit the invention. The terms "first" and "second" are used to identify different components but not different orders. Furthermore, the terms "comprise," "have" and other similar wordings have an open meaning. These terms are used to describe a process, method, system, product, or equipment including listed steps or units but not limited to those listed steps or units. Optionally, the process, method, system, product, or equipment could also include some other unlisted steps of units.

In the description of this specification, the description of the term " embodiment" means to refer to the specific feature, structure, material or characteristic described in connection with the embodiments or examples being included in at least one embodiment or example of the present disclosure. In the present specification, the term of the above schematic representation is not necessary for the same embodiment or example. Furthermore, the specific feature, structure, material, or characteristic described may be in combination in a suitable manner in any one or more of the embodiments or examples. In addition, it will be apparent to those skilled in the art that different embodiments or examples described in this specification, as well as features of different embodiments or examples, may be combined without contradictory circumstances.

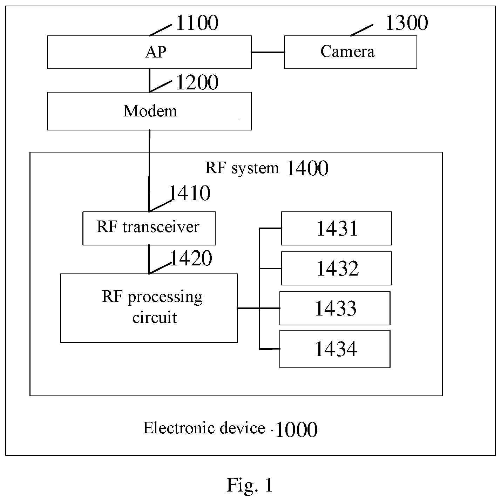

As shown in Fig. 1, an electronic device 1000 is disclosed according to an embodiment of the present disclosure. The electronic device 1000 comprises an application processor (AP) 1100, a modem 1200, a camera 1300, and an RF system 1400. The RF system 1400 comprises an RF transceiver 1410, an RF processing circuit 1420 and four antennas 1431, 1432, 1433 and 1434. The AP 1100 is connected to the modem 1200 and the camera 1300. The modem 1200 is connected to the RF transceiver 1410. The RF transceiver 1410 is connected to the RF processing circuit 1420. The RF processing circuit 1420 is connected to the four antennas.

The electronic device could comprise all kinds of portable devices, automotive devices, wearable devices, calculating devices or any other processing devices connected to the wireless modem and all kinds of user equipments (UE), mobile stations (MS) and terminal devices.

In addition, an electromagnetic control method is disclosed according to an embodiment of the present disclosure. The method will be illustrated with figures.

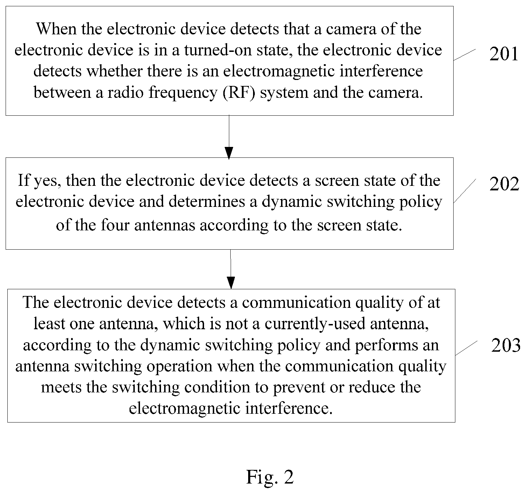

Please refer to Fig. 2. Fig. 2 is a flow chart of an electromagnetic interference control method according to an embodiment of the present disclosure. The method is used in the electronic device shown in Fig. 1. The method comprises:
Block 201: In response to detecting that a camera of the electronic device is in a turned-on state the electronic device detects whether there is an electromagnetic interference between a radio frequency (RF) system and the camera.

The electromagnetic interference represents the interference introduced by the RF system working in a certain working frequency band with the camera when the camera and the RF are working at the same time. The electronic device could check the PLL frequency of the camera (the working frequency of the camera) and the working frequency of the RF system to determine whether there is an electromagnetic interference between the camera and the RF system. For example, the electronic device could directly obtain the current working frequency of the camera and the current working frequency of the RF system and determine that there is an electromagnetic interference between the RF system and the camera if the two current working frequencies could match according to a predetermined condition. Furthermore, the electronic device could look up a table to determine whether there is an electromagnetic interference between the camera and the RF system. For example, a table of electromagnetic interference frequencies could be firstly established and the current working frequency of the RF system is obtained. If the current working frequency of the RF system is in the table, then electronic device determines an electromagnetic interference between the RF system and the camera.

Block 202: In response to the detected electromagnetic interference, the electronic device detects a screen state of the electronic device and determines a dynamic switching policy of the four antennas according to the screen state, wherein the screen state comprises a vertical screen state and a horizontal screen state and the dynamic switching policy comprises a detection priority sequence and a switching condition of the four antennas.

The side frame of the electronic device has a holding detection device. When the electronic device is in the bright-screen working state and in a vertical screen state or a horizontal screen state, the holding detection device detects the holding region that the user holds. After the holding region is detected, the electronic device firstly determines the current system time and combines the current system time with the current holding region to generate a holding record. When the holding detection device determines that the holding region changes, the holding time of the previous holding region is firstly determined and stored in the holding record generated according to the previous holding region. The holding region of the user is detected again and again. In this way, enormous holding records could be generated. The number of the four antennas being blocked is determined based on the holding region and holding time in each of the holding records under the same screen state and the detection priority sequence is generated accordingly.

Block 203: The electronic device detects a communication quality of at least one antenna, which is not a currently-used antenna, according to the dynamic switching policy and performs an antenna switching when the communication quality meets the switching condition to prevent or reduce the electromagnetic interference.

The electronic device one-by-one detects the four antennas according to the detection priority sequence of the dynamic switching policy. When it comes to the currently-used antenna in the detection priority sequence, then the currently-used antenna is skipped to detect a next antenna next to the currently-used antenna in the detection priority sequence.

In this embodiment, when the electronic device detects that the camera of the electronic device is in a turned-on state, the electronic device detects whether there is an electromagnetic interference between the RF system and the camera. If yes, then the electronic device detects a screen state of the electronic device and determines a dynamic switching policy of the four antennas according to the screen state, where the screen state comprises a vertical screen state and a horizontal screen state and the dynamic switching policy comprises a detection priority sequence and a switching condition of the four antennas. Then, the electronic device detects a communication quality of at least one antenna, which is not a currently-used antenna, according to the dynamic switching policy and performs an antenna switching when the communication quality meets the switching condition to prevent or reduce the electromagnetic interference. From the above, it can be seen that the electronic device in this embodiment could performs an antenna switching when an electromagnetic interference between the RF system and the camera is detected such that the electromagnetic interference is reduced or prevented.

The step that the electronic device performs to determine the dynamic switching policy of the four antennas according to the screen state comprises: utilizing the screen state as a checking identifier to check a mapping relationship and obtaining a corresponding dynamic switching policy corresponding to the screen state. The mapping relationship comprises a mapping relationship between the screen state and the dynamic switching policy.

The screen state comprises the horizontal screen state and the vertical screen state. The mapping relationship comprises a mapping relationship between the horizontal screen state and a dynamic switching policy corresponding to the horizontal screen state and a mapping relationship between the vertical screen state and a dynamic switching policy corresponding to the vertical screen state. The reason why the dynamic switching policy corresponding to the horizontal screen state and the dynamic switching policy corresponding to the vertical screen state are different is because the user holds different regions in the vertical/horizontal screen states such that the influence on the antennas of different locations is different.

For example, when the electronic device detects that the screen state is the horizontal screen state, the electronic device checks the mapping relationship corresponding to the horizontal screen state to obtain a horizontal-screen antenna switching policy. When the electronic device detects that the screen state is the vertical screen state, the electronic device checks the mapping relationship corresponding to the vertical screen state to obtain a vertical-screen antenna switching policy.

In this embodiment, the electronic device could check the mapping relationship according to the current screen state to determine the dynamic switching policy such that the switching efficiency of the antenna is raised.

Before the electronic device checks the mapping relationship, the method further comprises: obtaining a plurality of holding records of the electronic device, wherein each of the holding records comprises a screen state and a holding region; determining a blocked antenna corresponding each of the holding record according to the holding region of each of first holding records of a first number; determining a possibility of blocking each of the four antennas in a screen state according to the first holding records of the first number and the blocked antenna corresponding each of the first holding records; determining the detection priority sequence of the four antennas under a same screen state according to the possibility of blocking each of the four antennas; generating the dynamic switching policy according to the detection priority sequence and the switching condition; and establishing a corresponding relationship between the same screen state and the dynamic switching policy to form the mapping relationship.

Each of the holding records comprises the holding time of a holding region each time when the user holds the holding region. The electronic device could determine the total amount of time of holding the holding region under the same screen state according to the holding time of the holding region each time when the user holds the holding region under the same screen state in the holding records. Furthermore, the electronic device could obtain a possibility of holding the holding region through dividing the total amount of time of holding the holding region under the same screen state by the total amount of time of holding the electronic device under the same screen state. Furthermore, the possibility of blocking the antennas corresponding to the holding region could be obtained accordingly. Optionally, the possibility could be determined by other factors instead of the holding time. For example, the number of holding the holding region and the total number of holding the electronic device could be used to determine the possibility of holding the holding region and thus the possibility of blocking the antennas corresponding to the holding region could be obtained accordingly.

In this embodiment, the electronic device could determine the possibility of blocking each of the four antennas according to the stored holding records. In this way, the detection priority could be generated and thus the intelligence of the electronic device could be raised. Furthermore, the efficiency of switching antennas could be raised because the electronic device could perform the antenna switching and detection operation according to the detection priorities.

Before the electronic device checks the mapping relationship, the method further comprises: determining the detection priority sequence of the four antennas under a same screen state according to a user setting; generating the dynamic switching policy according to the detection priority sequence and the switching condition; and establishing a corresponding relationship between the same screen state and the dynamic switching policy to form the mapping relationship.

The user could perform a setting operation through the user interface of the electronic device. The user interface could real-time display the antenna that is being blocked by the user such that the user could understand the antennas blocked due to his ordinary holding way and perform the setting operation on the detection priorities.

In this embodiment, the user could self-define the detection priorities. This could raise the intelligence of the electronic device. Furthermore, the electronic device could perform the antenna detection/switching operations according to the detection priorities. Accordingly, the switching operation of the antennas could be raised and unnecessary resource waste, such as the battery loss and the power consumption for the antenna to perform the detection, is avoided.

The step that the electronic device performs to detect the communication quality of at least one antenna, which is not the currently-used antenna, according to the dynamic switching policy and perform an antenna switching when the communication quality meets the switching condition to prevent or reduce the electromagnetic interference comprises: determining whether a current antenna under processing is a last antenna scheduled for processing; if not, then determining a communication quality of the current antenna under processing and detecting whether the communication quality of the current antenna under processing meets the switching condition; if the communication quality of the current antenna under processing meets the switching condition, then perform the antenna switching; if the communication quality of the current antenna under processing does not meet the switching condition, then updating the current antenna under processing to be a next antenna scheduled for processing; wherein the next antenna scheduled for processing is a next antenna in the detection priority sequence next to the current antenna under processing; and if yes, determining the communication quality of the current antenna under processing and detecting whether the communication quality of the current antenna under processing meets the switching condition; if the communication quality of the current antenna under processing meets the switching condition, then perform the antenna switching; if the communication quality of the current antenna under processing does not meet the switching condition, then performing a frequency hopping operation.

When the electronic device performs the detection operation according to the dynamic switching policy, the electronic device orderly performs the detection operation according to the detection priority sequence. When it comes to the currently-used antenna, then the electronic device skips the currently-used antenna and detects the next antenna in the detection priority sequence.

For example, assume that the currently-used antenna is in the second position in the detection priority sequence. The electronic device detects, according to the detection priority sequence, that the antenna in the first position of the detection priority sequence is the antenna under processing. Then, the electronic device determines that the antenna in the first position of the detection priority sequence is not the last antenna scheduled for processing and thus detects the communication quality of the antenna that is in the first position in the detection priority sequence. If the communication quality meets the switching condition, then the detection operation is completed and the antenna switching is performed. If the communication quality does not meet the switching condition, then the electronic device detects that the next antenna is the currently-used antenna and thus skips it. Then, the electronic device detects the antenna in the third place in the detection priority sequence and determines that this antenna is not the last antenna scheduled for processing. The electronic device detects the communication quality of the antenna in the third place in the detection priority sequence and determines that this antenna is not the last antenna scheduled for processing. If the communication quality of the antenna in the third place meets the switching condition, then the detection operation is completed and the antenna switching is performed. If the communication quality of the antenna in the third place does not the switching condition, then the electronic device detects that the antenna in the fourth position in the detection priority sequence. The electronic device determines that the antenna in the fourth position in the detection priority sequence is the last antenna scheduled for processing. The electronic device detects the communication quality of the antenna in the fourth place in the detection priority sequence. If the communication quality of the antenna in the fourth place meets the switching condition, then the detection operation is completed and the antenna switching is performed. If the communication quality of the antenna in the fourth place does not the switching condition, then a frequency hopping operation is performed.

In this embodiment, the electronic device could orderly detect the communication quality of the antennas according to the detection priority sequence. If the communication quality of the antenna meets the switching condition, then the antenna switching is performed. If not, then a next antenna is detected. It is not necessary to detect all of the antennas. This could save some resources and raise the antenna switching efficiency and intelligence of the electronic device.

The electronic device further comprises: an application processor (AP) and a modem. The above-mentioned step of detecting whether there is the electromagnetic interference between the radio frequency (RF) system and the camera comprises: the electronic device obtains, through the modem, at least one detection value of a first frequency, obtains, through the AP, at least one detection value of a second frequency; wherein the first frequency is a communication frequency of the RF system and the second frequency is a phase-locked-loop (PLL) frequency of the camera; sends, through the AP, the at least one detection value of the second frequency to the modem; receives, through the modem, the at least one detection value of the second frequency; and the modem detects whether there is the electromagnetic interference between the camera and the RF system according to the at least one detection value of the first frequency and the at least one detection value of the second frequency.

The electronic device further comprises: an application processor (AP) and a modem. The above-mentioned step of detecting whether there is the electromagnetic interference between the radio frequency (RF) system and the camera comprises: the electronic device obtains, through the modem, at least one detection value of a first frequency, obtains, through the AP, at least one detection value of a second frequency; wherein the first frequency is a communication frequency of the RF system and the second frequency is a phase-locked-loop (PLL) frequency of the camera; sends, through the modem, the at least one detection value of the first frequency to the AP; receives, through the AP, the at least one detection value of the first frequency; and the AP detects whether there is the electromagnetic interference between the camera and the RF system according to the at least one detection value of the first frequency and the at least one detection value of the second frequency.

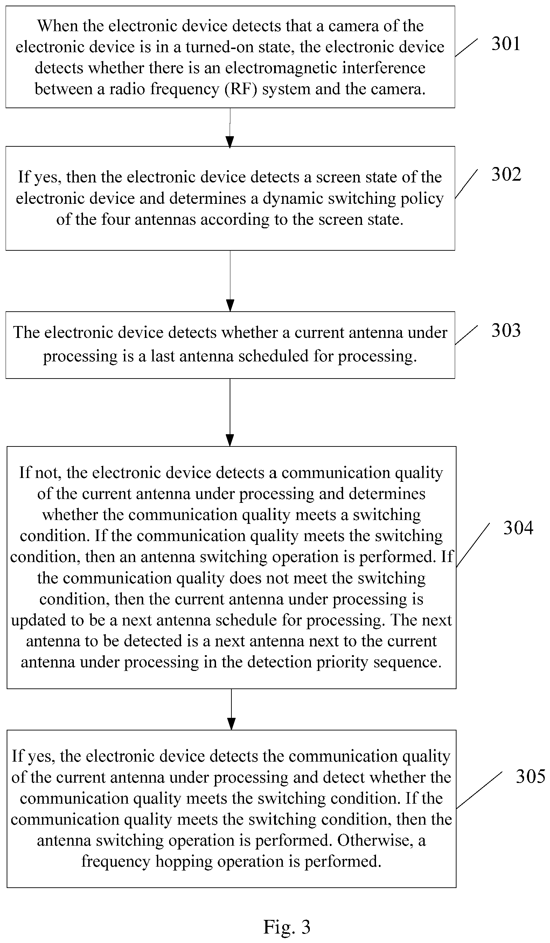

Consistent with the embodiment shown in Fig. 2, please refer to Fig. 3. Fig. 3 is a flow chart of an electromagnetic interference control method according to another embodiment of the present disclosure. The electromagnetic interference control method is used in an electronic device and comprises:
Block 301: In response to detecting that a camera of the electronic device is in a turned-on state the electronic device detects whether there is an electromagnetic interference between a radio frequency (RF) system and the camera.
Block 302: In response to the detected electromagnetic interference, the electronic device detects a screen state of the electronic device and determines a dynamic switching policy of the four antennas according to the screen state, wherein the screen state comprises a vertical screen state and a horizontal screen state and the dynamic switching policy comprises a detection priority sequence and a switching condition of the four antennas.
Block 303: The electronic device detects whether a current antenna under processing is a last antenna scheduled for processing.
Block 304: In response to the current antenna under processing not the last antenna scheduled for processing, the electronic device detects a communication quality of the current antenna under processing and determines whether the communication quality meets a switching condition. If the communication quality meets the switching condition, then an antenna switching is performed. If the communication quality does not meet the switching condition, then the current antenna under processing is updated to be a next antenna scheduled for processing. The next antenna scheduled for processing is a next antenna next to the current antenna under processing in the detection priority sequence.
Block 305: In response to the current antenna under processing being the last antenna scheduled for processing, the electronic device detects the communication quality of the current antenna under processing and detect whether the communication quality meets the switching condition. If the communication quality meets the switching condition, then the antenna switching is performed. Otherwise, a frequency hopping operation is performed.

ln this embodiment, when the electronic device detects that the camera of the electronic device is in a turned-on state, the electronic device detects whether there is an electromagnetic interference between the RF system and the camera. If yes, then the electronic device detects a screen state of the electronic device and determines a dynamic switching policy of the four antennas according to the screen state, where the screen state comprises a vertical screen state and a horizontal screen state and the dynamic switching policy comprises a detection priority sequence and a switching condition of the four antennas. Then, the electronic device detects a communication quality of at least one antenna, which is not a currently-used antenna, according to the dynamic switching policy and performs an antenna switching when the communication quality meets the switching condition to prevent or reduce the electromagnetic interference. From the above, it can be seen that the electronic device in this embodiment could performs an antenna switching when an electromagnetic interference between the RF system and the camera is detected such that the electromagnetic interference is reduced or prevented.

ln addition, the electronic device could orderly detect the communication quality of the antennas according to the detection priority sequence. If the communication quality of an antenna meets the switching condition, then the antenna switching is performed. Otherwise, a next antenna is detected. It is not required to detect all the antennas and thus could save the resources. Also, it could raise the antenna switching efficiency and the intelligence of the electronic device.

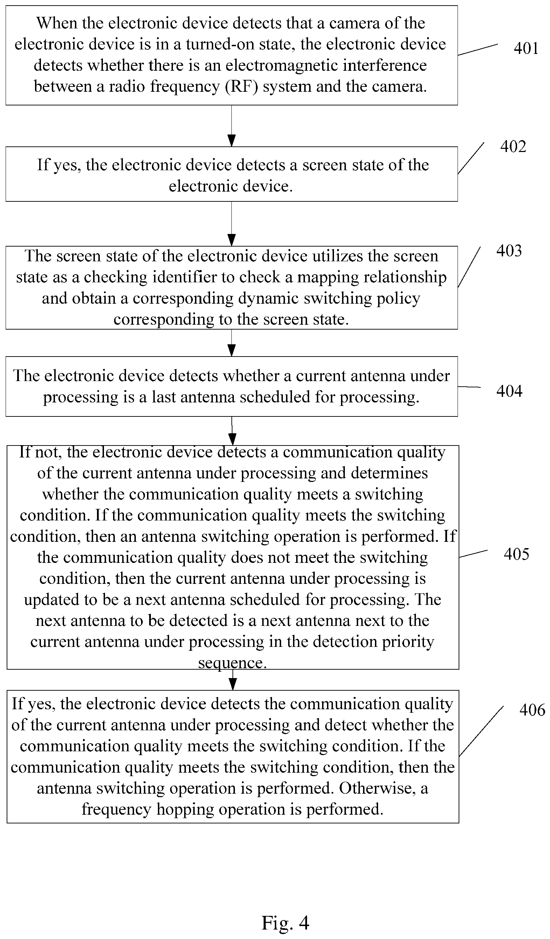

Consistent with the embodiment shown in Fig. 2, please refer to Fig. 4. Fig. 4 is a flow chart of an electromagnetic interference control method according to another embodiment of the present disclosure. The electromagnetic interference control method is used in the electronic device shown in Fig. 1. As shown in Fig. 4, the electromagnetic interference control method comprises:
Block 401: In response to detecting that a camera of the electronic device is in a turned-on state the electronic device detects whether there is an electromagnetic interference between a radio frequency (RF) system and the camera.
Block 402: In response to the detected electromagnetic interference, the electronic device detects a screen state of the electronic device.
Block 403: The screen state of the electronic device utilizes the screen state as a checking identifier to check a mapping relationship and obtain a corresponding dynamic switching policy corresponding to the screen state; wherein the mapping relationship comprises a mapping relationship between the screen state and the dynamic switching policy.
Block 404: The electronic device determines whether the current antenna under processing is a last antenna scheduled for processing.
Block 405: In response to the current antenna under processing not the last antenna scheduled for processing,, then the electronic device detects the communication quality of the current antenna under processing and determines whether the communication quality meets a switching condition. If the communication quality meets the switching condition, then an antenna switching is performed. If the communication quality does not meet the switching condition, then the current antenna under processing is updated to be a next antenna scheduled for processing. The next antenna scheduled for processing is a next antenna next to the current antenna under processing in the detection priority sequence.
Block 406: In response to the current antenna under processing being the last antenna scheduled for processing, the electronic device detects the communication quality of the current antenna under processing and detect whether the communication quality meets the switching condition. If the communication quality meets the switching condition, then the antenna switching is performed. Otherwise, a frequency hopping operation is performed.

In this embodiment, when the electronic device detects that the camera of the electronic device is in a turned-on state, the electronic device detects whether there is an electromagnetic interference between the RF system and the camera. If yes, then the electronic device detects a screen state of the electronic device and determines a dynamic switching policy of the four antennas according to the screen state, where the screen state comprises a vertical screen state and a horizontal screen state and the dynamic switching policy comprises a detection priority sequence and a switching condition of the four antennas. Then, the electronic device detects a communication quality of at least one antenna, which is not a currently-used antenna, according to the dynamic switching policy and performs an antenna switching when the communication quality meets the switching condition to prevent or reduce the electromagnetic interference. From the above, it can be seen that the electronic device in this embodiment could performs an antenna switching when an electromagnetic interference between the RF system and the camera is detected such that the electromagnetic interference is reduced or prevented.

In addition, the electronic device could determine the possibility of blocking each of the antennas according to the stored holding records and generate the detection priority sequence accordingly. This could raise the intelligence of the electronic device. Furthermore, the antenna switching efficiency could be raised when the electronic device performs the antenna detection/switching operation according to the detection priority sequence.

Furthermore, the electronic device could orderly detect the communication quality of the antennas. If the communication quality of an antenna meets the switching condition, then the antenna switching is performed. Otherwise, a next antenna is detected. It is not required to detect all the antennas and thus could save the resources. Also, it could raise the antenna switching efficiency and the intelligence of the electronic device.

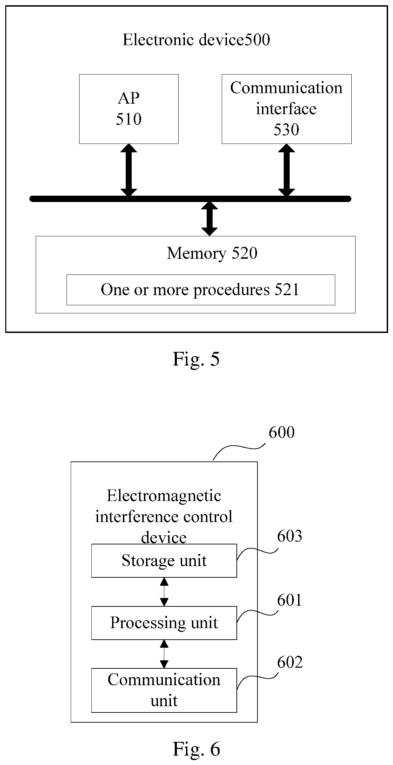

Consistent with the embodiments shown in Figs. 2-4, please refer to Fig. 5 illustrating a diagram of an electronic device 500 according to another embodiment of the present disclosure. As shown in Fig. 5, the electronic device 500 comprises an AP 510, a memory 520, a communication interface 530, and one or more procedures 521. Here, the one or more procedures 521 are stored in the memory 520 and are executed by the AP 510 to perform the following steps:
detecting whether there is an electromagnetic interference between a radio frequency (RF) system and the camera in response to detecting that a camera of the electronic device is in a turned-on state;
detecting a screen state of the electronic device in response to the detected electromagnetic interference, and determining a dynamic switching policy of the four antennas according to the screen state, wherein the screen state comprises a vertical screen state and a horizontal screen state, and the dynamic switching policy comprises a detection priority sequence of the four antennas and a switching condition of the four antennas; and
detecting a communication quality of at least one antenna not currently-used according to the dynamic switching policy, and performing an antenna switching in response to the communication quality meeting the switching condition.

In this embodiment, when the electronic device detects that the camera of the electronic device is in a turned-on state, the electronic device detects whether there is an electromagnetic interference between the RF system and the camera. The electronic device detects a screen state of the electronic device in response to the detected electromagnetic interference and determines a dynamic switching policy of the four antennas according to the screen state, where the screen state comprises a vertical screen state and a horizontal screen state and the dynamic switching policy comprises a detection priority sequence and a switching condition of the four antennas. Then, the electronic device detects a communication quality of at least one antenna not currently-used according to the dynamic switching policy and performs an antenna switching in response to the communication quality meeting the switching condition to prevent or reduce the electromagnetic interference. From the above, it can be seen that the electronic device in this embodiment could performs an antenna switching when an electromagnetic interference between the RF system and the camera is detected such that the electromagnetic interference is reduced or prevented.

In some embodiments, the operation of determining the dynamic switching policy of the four antennas according to the screen state comprises: checking a mapping relationship between the screen state and the dynamic switching policy based on the screen state as a checking identifier, and obtaining the dynamic switching policy corresponding to the screen state. The mapping relationship comprises a mapping relationship between the screen state and the dynamic switching policy.

ln some embodiments, the device further performs operations comprising: obtaining a plurality of holding records of the electronic device, wherein each of the holding records comprises a screen state and a holding region; selecting a first number of first holding records comprising a same screen state; determining a blocked antenna corresponding to each of the first holding records according to the each holding region of the first number of the first holding records; determining a possibility of each of the four antennas being blocked in a screen state according to the first number of the first holding records and the blocked antenna corresponding to each of the first holding records; determining the detection priority sequence of the four antennas under a same screen state according to the possibility of each of the four antennas being blocked; generating the dynamic switching policy according to the detection priority sequence and the switching condition; and establishing a corresponding relationship between the same screen state and the dynamic switching policy.

ln some embodiments, the device further performs operations comprising: determining the detection priority sequence of the four antennas under a same screen state according to a user setting; generating the dynamic switching policy according to the detection priority sequence and the switching condition; and establishing a corresponding relationship between the same screen state and the dynamic switching policy.

In some embodiments, the operation of detecting the communication quality of at least one antenna not the currently-used according to the dynamic switching policy, and performing the antenna switching in response to the communication quality meeting the switching condition comprises: determining whether a current antenna under processing is a last antenna scheduled for processing; in response to the current antenna under processing being not the last antenna scheduled for processing, determining a communication quality of the current antenna under processing and detecting whether the communication quality of the current antenna under processing meets the switching condition; performing the antenna switching in response to the communication quality of the current antenna under processing meeting the switching condition; updating the current antenna under processing to be a next antenna scheduled for processing in response to the communication quality of the current antenna under processing not meeting the switching condition; wherein the next antenna scheduled for processing is in the detection priority sequence next to the current antenna under processing; and in response to the current antenna under processing being the last antenna scheduled for processing, determining the communication quality of the current antenna under processing and detecting whether the communication quality of the current antenna under processing meets the switching condition; performing the antenna switching in response to the communication quality of the current antenna under processing meeting the switching condition; performing a frequency hopping in response to the communication quality of the current antenna under processing not meeting the switching condition.

In some embodiments, the device further comprises an application processor (AP) and a modem. The operation of detecting whether there is the electromagnetic interference between the radio frequency (RF) system and the camera comprises: utilizing the modem to obtain at least one detection value of a first frequency, utilizing the AP to obtain at least one detection value of a second frequency; wherein the first frequency is a communication frequency of the RF system and the second frequency is a phase-locked-loop (PLL) frequency of the camera; utilizing the AP to send the at least one detection value of the second frequency to the modem; utilizing the modem to receive the at least one detection value of the second frequency; utilizing the modem to detect whether there is the electromagnetic interference between the camera and the RF system according to the at least one detection value of the first frequency and the at least one detection value of the second frequency.

In some embodiments, the device further comprises an application processor (AP) and a modem. The operation of detecting whether there is the electromagnetic interference between the camera and the RF system comprises: utilizing the modem to obtain at least one detection value of a first frequency, utilizing the AP to obtain at least one detection value of a second frequency; wherein the first frequency is a communication frequency of the RF system and the second frequency is a phase-locked-loop (PLL) frequency of the camera; utilizing the modem to send the at least one detection value of the first frequency to the AP; utilizing the AP to receive the at least one detection value of the first frequency; utilizing the AP to detect whether there is the electromagnetic interference between the camera and the RF system according to the at least one detection value of the first frequency and the at least one detection value of the second frequency.

In order to achieve the above functions, the electronic device comprises corresponding hardware structures and/or software modules corresponding to the functions. A person having ordinary skills in the art could easily understand that the present disclosure could be implemented with hardware or a combination of hardware and software to achieve each of the components or steps in the above-mentioned embodiments. A person having ordinary skill in the art (POSITA) could determine how to implement each function, for example, by hardware or a combination of hardware and software, according to the design choices. A POSITA could implement each function in different ways. These changes all fall within the scope of the present disclosure.

According to the embodiments of the present disclosure, the electronic device is divided into functional units. For example, each functional unit may be divided corresponding to each function, or two or more functions may be integrated into one processing unit. The above-mentioned integrated unit can be implemented in the form of hardware or software functional unit. It should be noted that the division of units in the embodiments of the present application is illustrative, and is only a logical function division, and there may be other division methods in actual implementation.

Fig. 6 is a functional block diagram of an electromagnetic interference control device 600 according to another embodiment of the present disclosure. The control device 600 is used in an electronic device. The control device 600 comprises a processing unit 601 and a communication unit 602. The control device 600 further comprises four antennas (not shown).

The processing unit 601 is configured to detect whether there is an electromagnetic interference between a radio frequency (RF) system and a camera when the camera of the electronic device is in a turned-on state. The processing unit 601 detects a screen state of the electronic device and determines a dynamic switching policy of the four antennas according to the screen state. The processing unit 601 detects a communication quality of at least one antenna not currently-used according to the dynamic switching policy, and performs an antenna switching in response to the communication quality meeting the switching condition to prevent or reduce the electromagnetic interference, where the screen state comprises a vertical screen state and a horizontal screen stat and the dynamic switching policy comprises a detection priority sequence and a switching condition of the four antennas.

The control device 600 could further comprise a storage unit 603, configured to store a procedure code and data of the electronic device. The processing unit 601 could be a processor. The communication unit 602 could be a touch panel or a transceiver. The storage unit 603 could be a memory.

In this embodiment, when the electronic device detects that the camera of the electronic device is in a turned-on state, the electronic device detects whether there is an electromagnetic interference between the RF system and the camera. the electronic device detects a screen state of the electronic device in response to the detected electromagnetic interference, and determines a dynamic switching policy of the four antennas according to the screen state, where the screen state comprises a vertical screen state and a horizontal screen state, and the dynamic switching policy comprises a detection priority sequence of the four antennas and a switching condition of the four antennas. The electronic device detects a communication quality of at least one antenna not currently-used according to the dynamic switching policy and performs an antenna switching in response to the communication quality meeting the switching condition to prevent or reduce the electromagnetic interference. From the above, it can be seen that the electronic device in this embodiment could performs an antenna switching when an electromagnetic interference between the RF system and the camera is detected such that the electromagnetic interference is reduced or prevented.

In some embodiments, the operation of determining the dynamic switching policy of the four antennas according to the screen state, performed by the processing unit 601, comprises: checking a mapping relationship between the screen state and the dynamic switching policy based on the screen state as a checking identifier, and obtaining the dynamic switching policy corresponding to the screen state.

In some embodiments, before checking the mapping relationship, the processing unit 601 further performs operations comprising: obtaining a plurality of holding records of the electronic device, wherein each of the holding records comprises a screen state and a holding region; selecting a first number of first holding records comprising a same screen state; determining a blocked antenna corresponding to each of the first holding records according to the each holding region of the first number of the first holding records; determining a possibility of each of the four antennas being blocked in a screen state according to the first number of the first holding records and the blocked antenna corresponding to each of the first holding records; determining the detection priority sequence of the four antennas under a same screen state according to the possibility of each of the four antennas being blocked; generating the dynamic switching policy according to the detection priority sequence and the switching condition; and establishing a corresponding relationship between the same screen state and the dynamic switching policy.

In some embodiments, the processing unit 601 further performs operations comprising: determining the detection priority sequence of the four antennas under a same screen state according to a user setting; generating the dynamic switching policy according to the detection priority sequence and the switching condition; and establishing a corresponding relationship between the same screen state and the dynamic switching policy.

In some embodiments, the operation of detecting the communication quality of at least one antenna not the currently-used according to the dynamic switching policy, and performing the antenna switching in response to the communication quality meeting the switching condition comprises: determining whether a current antenna under processing is a last antenna scheduled for processing; in response to the current antenna under processing being not the last antenna scheduled for processing, determining a communication quality of the current antenna under processing and detecting whether the communication quality of the current antenna under processing meets the switching condition; performing the antenna switching in response to the communication quality of the current antenna under processing meeting the switching condition; updating the current antenna under processing to be a next antenna scheduled for processing in response to the communication quality of the current antenna under processing not meeting the switching condition; wherein the next antenna scheduled for processing is in the detection priority sequence next to the current antenna under processing; and in response to the current antenna under processing being the last antenna scheduled for processing, determining the communication quality of the current antenna under processing and detecting whether the communication quality of the current antenna under processing meets the switching condition; performing the antenna switching in response to the communication quality of the current antenna under processing meeting the switching condition; performing a frequency hopping in response to the communication quality of the current antenna under processing not meeting the switching condition.

ln some embodiments, the device further comprises an application processor (AP) and a modem. The operation of detecting whether there is the electromagnetic interference between the radio frequency (RF) system and the camera, performed by the processing unit 601, comprises: utilizing the modem to obtain at least one detection value of a first frequency, utilizing the AP to obtain at least one detection value of a second frequency; wherein the first frequency is a communication frequency of the RF system and the second frequency is a phase-locked-loop (PLL) frequency of the camera; utilizing the AP to send the at least one detection value of the second frequency to the modem; utilizing the modem to receive the at least one detection value of the second frequency; utilizing the modem to detect whether there is the electromagnetic interference between the camera and the RF system according to the at least one detection value of the first frequency and the at least one detection value of the second frequency.

**ln** some embodiments, the device further comprises an application processor (AP) and a modem. The operation of detecting whether there is the electromagnetic interference between the camera and the RF system, performed by the processing unit 601, comprises: utilizing the modem to obtain at least one detection value of a first frequency, utilizing the AP to obtain at least one detection value of a second frequency; wherein the first frequency is a communication frequency of the RF system and the second frequency is a phase-locked-loop (PLL) frequency of the camera; utilizing the modem to send the at least one detection value of the first frequency to the AP; utilizing the AP to receive the at least one detection value of the first frequency; utilizing the AP to detect whether there is the electromagnetic interference between the camera and the RF system according to the at least one detection value of the first frequency and the at least one detection value of the second frequency.

The present disclosure further discloses a computer storage medium, which is configured to store computer procedures for electronic data exchange. The computer procedures are executed by a computer to execute a part or all of the steps disclosed above. The computer comprises the electronic device.

The present disclosure further discloses a computer procedure product. The computer procedure product comprises a non-volatile computer readable medium storing computer procedures. The computer procedures are executed by a computer to execute a part or all of the steps disclosed above. The computer procedure product could be a software installation package. The computer comprises the electronic device.

It should be noted that, in the above embodiments, steps are described in a certain order. However, this is only for simply illustrating the embodiments, not a limitation of the present disclosure. In the actual implementation, the steps are not limited in a certain order because another order could be executed or some steps could be simultaneously executed. In addition, a POSITA should understand that the above-mentioned embodiments are preferred embodiments but the related operations and modules mean no limitation of the present disclosure.

In each of the above-mentioned embodiments, it may focus on different parts. However, for those are not illustrated in details in a certain embodiment, a POSITA could refer to related descriptions in another embodiment.

In some embodiments of the present disclosure, it should be understood that the disclosed device could be implemented with another way. For example, the device embodiment disclosed above is only an example. For instance, the division of some units is defined by their logic functions. In the actual implementation, there could be other definitions. For example, some units or components could be combined or integrated into another system. Or, some features could be ignored or not executed. In addition, two components could be coupled, directly connected, or communication coupled to each other through some interfaces. Or, two components could be coupled, indirectly connected or communication coupled through an electrical connection or other forms.

The units described above as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the present disclosure may be integrated into a processing module, or each unit may be physically present individually, or two or more units may be integrated into one module. The above integrated module may be implemented by using hardware, or may be implemented by using a software function module.

If the above-mentioned integrated components are implemented with a software functional unit and sold or used as an independent product. They could be stored in a computer-readable storage medium. Based on this understanding, a part of all of the technical solution, which is beneficial to the conventional art, according to the present disclosure could be implemented with software product. The computer software product could be stored in a memory. The computer software product comprises some instructions for a computer (which could be a personal computer, a server, or a network equipment) to perform a part or all of steps in the above-mentioned method in the above embodiments. The above-mentioned memory comprises: a USB drive, a flash memory, a read-only memory (ROM), a random access memory (RAM), a portable hard disk, an optical disk, a magnetic disk, or any other medium that could store procedure codes.

A POSITA could understand that a part or all steps in the above-mentioned methods could be implemented with a procedure instructing related hardware components. The procedure could be stored in a computer-readable storage medium. The medium could comprise: a flash memory, a read-only memory (ROM), a random access memory (RAM), an optical disk or a magnetic disk.

Above are embodiments of the present disclosure, which does not limit the scope of the present disclosure. Any modifications, equivalent replacements or improvements within the spirit and principles of the embodiment described above should be covered by the protected scope of the invention.

## Claims

1. An electromagnetic interference control method, for an electronic device comprising four antennas, **characterized in that** the method comprises:
detecting whether there is an electromagnetic interference between a radio frequency, RF, system and the camera in response to detecting that a camera of the electronic device is in a turned-on state;
detecting a screen state of the electronic device in response to the detected electromagnetic interference, and determining a dynamic switching policy of the four antennas according to the screen state, wherein the screen state comprises a vertical screen state and a horizontal screen state, and the dynamic switching policy comprises a detection priority sequence of the four antennas and a switching condition of the four antennas; and
detecting a communication quality of at least one antenna not currently-used according to the dynamic switching policy, and performing an antenna switching in response to the communication quality meeting the switching condition.

2. The method of claim 1, **characterized in that** the determining the dynamic switching policy of the four antennas according to the screen state comprises:
checking a mapping relationship between the screen state and the dynamic switching policy based on the screen state as a checking identifier, and obtaining the dynamic switching policy corresponding to the screen state.

3. The method of claim 2, further comprising:
obtaining a plurality of holding records of the electronic device, wherein each of the holding records comprises a screen state and a holding region;
selecting a first number of first holding records comprising a same screen state;
determining a blocked antenna corresponding to each of the first holding records according to the each holding region of the first number of the first holding records;
determining a possibility of each of the four antennas being blocked in a screen state according to the first number of the first holding records and the blocked antenna corresponding to each of the first holding records;
determining the detection priority sequence of the four antennas under a same screen state according to the possibility of each of the four antennas being blocked;
generating the dynamic switching policy according to the detection priority sequence and the switching condition; and
establishing a corresponding relationship between the same screen state and the dynamic switching policy.

4. The method of claim 2, further comprising:
determining the detection priority sequence of the four antennas under a same screen state according to a user setting;
generating the dynamic switching policy according to the detection priority sequence and the switching condition; and
establishing a corresponding relationship between the same screen state and the dynamic switching policy.

5. The method of any one of claims 1-4, **characterized in that** the detecting the communication quality of at least one antenna not the currently-used according to the dynamic switching policy, and performing the antenna switching in response to the communication quality meeting the switching condition comprises:
determining whether a current antenna under processing is a last antenna scheduled for processing;
in response to the current antenna under processing being not the last antenna scheduled for processing, determining a communication quality of the current antenna under processing and detecting whether the communication quality of the current antenna under processing meets the switching condition; performing the antenna switching in response to the communication quality of the current antenna under processing meeting the switching condition; updating the current antenna under processing to be a next antenna scheduled for processing in response to the communication quality of the current antenna under processing not meeting the switching condition; wherein the next antenna scheduled for processing is in the detection priority sequence next to the current antenna under processing; and
in response to the current antenna under processing being the last antenna scheduled for processing, determining the communication quality of the current antenna under processing and detecting whether the communication quality of the current antenna under processing meets the switching condition; performing the antenna switching in response to the communication quality of the current antenna under processing meeting the switching condition; performing a frequency hopping in response to the communication quality of the current antenna under processing not meeting the switching condition.

6. The method of any one of claims 1-5, **characterized in that** the electronic device further comprises an application processor, AP, and a modem, and the detecting whether there is the electromagnetic interference between the RF system and the camera comprises:
utilizing the modem to obtain at least one detection value of a first frequency, utilizing the AP to obtain at least one detection value of a second frequency; wherein the first frequency is a communication frequency of the RF system and the second frequency is a phase-locked-loop, PLL, frequency of the camera;
utilizing the AP to send the at least one detection value of the second frequency to the modem;
utilizing the modem to receive the at least one detection value of the second frequency;
utilizing the modem to detect whether there is the electromagnetic interference between the camera and the RF system according to the at least one detection value of the first frequency and the at least one detection value of the second frequency.

7. The method of any one of claims 1-5, **characterized in that** the electronic device further comprises: an application processor, AP, and a modem, and the detecting whether there is the electromagnetic interference between the camera and the RF system comprises:
utilizing the modem to obtain at least one detection value of a first frequency, utilizing the AP to obtain at least one detection value of a second frequency; wherein the first frequency is a communication frequency of the RF system and the second frequency is a phase-locked-loop, PLL, frequency of the camera;
utilizing the modem to send the at least one detection value of the first frequency to the AP;
utilizing the AP to receive the at least one detection value of the first frequency;
utilizing the AP to detect whether there is the electromagnetic interference between the camera and the RF system according to the at least one detection value of the first frequency and the at least one detection value of the second frequency.

8. The method of claim 1, **characterized in that** the detecting whether there is the electromagnetic interference between the camera and the RF system comprises:
obtaining a current working frequency of the camera and a current working frequency of the RF system, and determining the electromagnetic interference between the camera and the RF system in response to the current working frequency of the camera matching the current working frequency of the RF system according to a predetermined rule; or
detecting whether there is the electromagnetic interference between the camera and the RF system by looking up a table.

9. The method of claim 1, **characterized in that** the detection priority sequence of the four antennas is generated according to a number of times each of four antennas being blocked, the number of times of the each of the four antennas being blocked being determined according to a holding region and a holding time of each of holding records under a same screen state.

10. An electromagnetic interference control device, used in an electronic device, comprising:
four antennas;
a communication unit; and
a processing unit, configured to detect whether there is an electromagnetic interference between a radio frequency, RF, system and a camera in response to detecting that a camera of the electronic device is in a turned-on state; configured to detect a screen state of the electronic device in response to the detected electromagnetic interference, and to determine a dynamic switching policy of the four antennas according to the screen state; configured to detect a communication quality of at least one antenna not currently-used according to the dynamic switching policy, and to perform an antenna switching in response to the communication quality meeting the switching condition,
wherein the screen state comprises a vertical screen state and a horizontal screen state, and the dynamic switching policy comprises a detection priority sequence of the four antennas and a switching condition of the four antennas.

11. The electromagnetic interference control device of claim 10, wherein the operation of determining the dynamic switching policy of the four antennas according to the screen state comprises:
checking a mapping relationship by utilizing the screen state as a checking identifier, and obtaining a corresponding dynamic switching policy corresponding to the screen state;
wherein the mapping relationship comprises a mapping relationship between the screen state and the dynamic switching policy.

12. The electromagnetic interference control device of claim 11, further comprising following operations before checking the mapping relationship:
obtaining a plurality of holding records of the electronic device, wherein each of the holding records comprises a screen state and a holding region;
determining a blocked antenna corresponding each of the holding record according to the holding region of each of first holding records of a first number;
determining a possibility of blocking each of the four antennas in a screen state according to the first holding records of the first number and the blocked antenna corresponding each of the first holding records;
determining the detection priority sequence of the four antennas under a same screen state according to the possibility of blocking each of the four antennas;
generating the dynamic switching policy according to the detection priority sequence and the switching condition; and
establishing a corresponding relationship between the same screen state and the dynamic switching policy to form the mapping relationship.

13. The electromagnetic interference control device of claim 11, further comprising following operations before the operation of checking the mapping relationship:
determining the detection priority sequence of the four antennas under a same screen state according to a user setting;
generating the dynamic switching policy according to the detection priority sequence and the switching condition; and
establishing a corresponding relationship between the same screen state and the dynamic switching policy to form the mapping relationship.

14. The electromagnetic interference control device of any one of claims 10-13, wherein the operation of detecting the communication quality of at least one antenna, which is not the currently-used antenna, according to the dynamic switching policy and performing the antenna switching operation when the communication quality meets the switching condition to prevent or reduce the electromagnetic interference comprises:
determining whether a current antenna under processing is a last antenna to be detected;
if the current antenna under processing is not the last antenna to be detected, then determining a communication quality of the current antenna under processing and detecting whether the communication quality of the current antenna under processing meets the switching condition; if the communication quality of the current antenna under processing meets the switching condition, then perform the antenna switching operation; if the communication quality of the current antenna under processing does not meet the switching condition, then updating the current antenna under processing to be a next antenna to be detected; wherein the next antenna to be detected is a next antenna in the detection priority sequence next to the current antenna under processing; and
if the current antenna under processing is the last antenna to be detected, determining the communication quality of the current antenna under processing and detecting whether the communication quality of the current antenna under processing meets the switching condition; if the communication quality of the current antenna under processing meets the switching condition, then perform the antenna switching operation; if the communication quality of the current antenna under processing does not meet the switching condition, then performing a frequency hopping operation.

15. The electromagnetic interference control device of any one of claim 10-14, further comprising an application processor, AP, and a modem, wherein the operation of detecting whether there is the electromagnetic interference between the RF system and the camera comprises:
utilizing the modem to obtain at least one detection value of a first frequency, utilizing the AP to obtain at least one detection value of a second frequency; wherein the first frequency is a communication frequency of the RF system and the second frequency is a phase-locked-loop, PLL, frequency of the camera;
utilizing the AP to send the at least one detection value of the second frequency to the modem;
utilizing the modem to receive the at least one detection value of the second frequency;
utilizing the modem to detect whether there is the electromagnetic interference between the camera and the RF system according to the at least one detection value of the first frequency and the at least one detection value of the second frequency.

16. The electromagnetic interference control device of any one of claim 10-14, further comprising: an application processor, AP, and a modem, wherein the operation of detecting whether there is the electromagnetic interference between the camera and the RF system comprises:
utilizing the modem to obtain at least one detection value of a first frequency, utilizing the AP to obtain at least one detection value of a second frequency; wherein the first frequency is a communication frequency of the RF system and the second frequency is a phase-locked-loop, PLL, frequency of the camera;
utilizing the modem to send the at least one detection value of the first frequency to the AP;
utilizing the AP to receive the at least one detection value of the first frequency;
utilizing the AP to detect whether there is the electromagnetic interference between the camera and the RF system according to the at least one detection value of the first frequency and the at least one detection value of the second frequency.

17. The electromagnetic interference control device of claim 10, wherein the operation of detecting whether there is the electromagnetic interference between the camera and the RF system comprises:
obtaining a current working frequency of the camera and a current working frequency of the RF system, if the current working frequency of the camera and the current working frequency of the RF system match according to a predetermined rule, then determine that there is the electromagnetic interference between the camera and the RF system; or
detecting whether there is the electromagnetic interference between the camera and the RF system by looking up a table.

18. The electromagnetic interference control device of claim 10, wherein the detection priority sequence of the four antennas is generated according to under a holding region and a number of times of blocking the four antennas during a holding time under a same screen state.

19. An electronic device comprising: a processor, a memory, a communication interface, and one or more procedures stored in the memory comprising instructions that are executable by the processor to perform steps of the method as claimed in any one of claims 1-7.

20. A computer-readable storage medium storing computer procedures for electronic data interchange, wherein the computer procedures are executable by a computer to perform the method as claimed in any one of claims 1-7.
